# NEW EUROPEAN PATENT SPECIFICATION

(11) **EP 2 949 997 B2**
(45) Date of publication and mention of the opposition decision: **11.11.2020**
(45) Mention of the grant of the patent: 07.06.2017
(21) Application number: 15155223.9
(22) Date of filing: 26.03.2013
(51) Int. Cl.: F23J 15/04

(54) **Method and arrangement for transferring heat from flue gas into fluid**
Verfahren und Anordnung zum Übertragen von Wärme aus Rauchgas in ein Fluid
Procédé et agencement pour transférer la chaleur d'un gaz de combustion vers un fluide

(30) Priority: 26.03.2012 FI 20125341
(43) Date of publication of application: 02.12.2015
(62) Divisional of application: 13161054.5
(73) Proprietor: Elomatic Oy, 20810 Turku (FI)
(72) Inventor: Nummila, Mika, 40200 Jyväskylä (FI)
(74) Representative: Berggren Oy, Turku

(56) References cited:
- EP-A1- 1 816 397
- DE-A1- 3 607 356

## Description

### TECHNICAL FIELD OF THE INVENTION

The present invention relates to an arrangement for transferring heat from flue gas into fluid according to the preamble of the appended independent claim.

### BACKGROUND OF THE INVENTION

Flue gas scrubbers are widely used in heating and power plants for recovering heat from flue gas which is produced in the combustion of a fuel. In a flue gas scrubber, the flue gas is cooled so that water vapour contained in the flue gas condenses and the released condensing heat may be utilised. For example, in a district heating plant the condensing heat is used to heat district heating water.

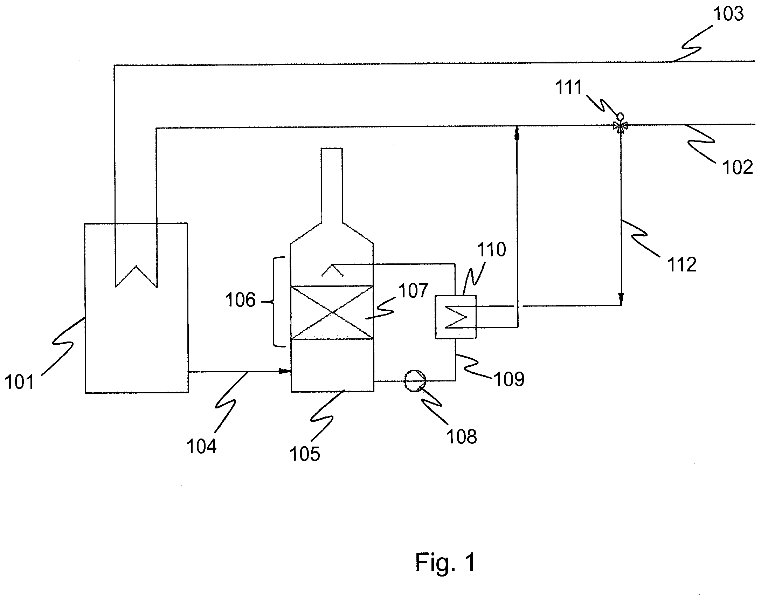

Fig. 1 illustrates a known district heating plant. The plant comprises a heating boiler 101 in which fuel, such as biomass or fossil fuel, is burned. The fuel, as well as the air that is needed in the combustion process, are supplied in a controlled manner into the heating boiler 101. The heat energy that is released in the combustion of the fuel is used to heat water that flows in a district heating network. The water to be heated is supplied to the heating boiler 101 through a return pipe 102, and the heated water is supplied back to the district heating network through a supply pipe 103. The district heating network distributes the heat for residential and commercial heating requirements such as space heating and water heating.

The combustion of the fuel produces flue gas which is led from the heating boiler 101 through a pipe 104 into a flue gas scrubber 105. In the flue gas scrubber 105, the flue gas is passed through a heat exchange zone (also called a packing zone) 106 which comprises a random packing bed 107 acting as a heat and mass transfer surface. The flue gas is cooled by spraying scrubbing water over the packing bed 107, as a result of which heat is released from the flue gas and recovered into the scrubbing water. The scrubbing water is circulated by using a pump 108 through a circulating pipe 109 from the flue gas scrubber 105 into a heat exchanger 110, and back to the flue gas scrubber 105.

The return water of the district heating network is divided into two portions by a three-way valve 111. The first portion of the return water is circulated via a pipe 112 through the heat exchanger 110 and then combined with the second portion of the return water. In the heat exchanger 110, heat from the scrubbing water is transferred into the first portion of the return water. The temperature of the scrubbing water that is circulated back to the flue gas scrubber 105 depends on the temperature of the first portion of the return water.

The amount of heat that is released in the scrubbing process depends on the temperature of the scrubbing water, and the dew point of the flue gas. The dew point depends on the moisture content of the flue gas. If the flue gas can be cooled under its dew point, the water vapour contained in the flue gas condenses and a large amount of heat is released and recovered into the scrubbing water. In a case where the flue gas cannot be cooled under its dew point, the flue gas scrubber acts as a humidifier and the efficiency of the heat recovery process is poor.

A drawback of the known district heating plant according to fig. 1 is that its heat recovery efficiency is in many situations poor due to the fact that the flue gas cannot be cooled under its dew point in the flue gas scrubber.

A known solution to improve the efficiency of the district heating plant according to fig. 1 is to equip the plant with a combustion air humidifier. The combustion air humidifier improves the heat recovery capacity by increasing the moisture content of the flue gas and by leading the return water from the combustion air humidifier to another heat exchange zone of the flue gas scrubber in order to further cool the flue gas.

The combustion air humidifier is, however, known to have some drawbacks, such as corrosion problems in a heating boiler due to the increased moisture content, a relatively high pressure drop over the combustion air system and condensation problems in the combustion air system.

EP 1 816 397 discloses an arrangement according to the preamble of claim 1.

### OBJECTIVES OF THE INVENTION

It is the main objective of the present invention to reduce or even eliminate prior art problems presented above.

It is an objective of the present invention to provide an arrangement for recovering heat from flue gas. In more detail, it is an objective of the invention to provide an arrangement enabling to efficiently transfer heat from flue gas into fluid, such as water of a district heating network. It is still a further objective of the invention to provide an arrangement enabling to cost-effectively recover heat from flue gas.

In order to realise the above-mentioned objectives, the arrangement according to the invention is characterised by what is presented in the characterising portion of the appended independent claim. Advantageous embodiments of the invention are described in the dependent claims.

### DESCRIPTION OF THE INVENTION

A typical method for transferring heat from flue gas into fluid, which is not according to the invention comprises passing the flue gas through a flue gas scrubber, cooling the flue gas in the flue gas scrubber with scrubbing liquid, circulating scrubbing liquid from the flue gas scrubber into a first heat exchanger and back to the flue gas scrubber, and passing a first portion of the fluid through the first heat exchanger, whereby heat from the scrubbing liquid is transferred into the first portion of the fluid. A typical method, which is not according to the invention further comprises, before passing the first portion of the fluid through the first heat exchanger, transferring heat from the first portion of the fluid into a second portion of the fluid.

In a method, which is not according to the invention the fluid, such as district heating water, is divided into portions which are arranged to flow along different flow paths. The first portion of the fluid is cooled before it is passed through the first heat exchanger, and the released heat (i.e. heat energy) is transferred into the second portion of the fluid. The fluid is preferably divided into two portions. The first portion of the fluid may be, for example, 10-20 %, 20-40 % or 40-70 % of the flow of the fluid, and it can be adjusted, for example, according to the temperature of the fluid.

Because the first portion of the fluid is cooled before it passes through the first heat exchanger, the temperature of the scrubbing liquid that is circulated from the first heat exchanger back to the flue gas scrubber is lower compared to a method in which the fluid is not cooled. This has the benefit of allowing the flue gas to be cooled in the flue gas scrubber to a lower temperature, which improves the heat recovery capacity of the flue gas scrubber. Because in such a method the flue gas can be cooled to a lower temperature, more condensation heat can be released and recovered into the scrubbing liquid. Another advantage of such a method is that the heat which is released in a cooling process from the first portion of the fluid is transferred back to the fluid. This improves the efficiency even further.

A method, which is not according to the invention can be applied in various types of heating and power plants. Especially the invention can be applied in a district heating plant which comprises a heating boiler for heating water that flows in a district heating network. In the heating boiler fuel is burned and the released heat is transferred into the district heating water. Flue gas which is produced in the combustion of the fuel is passed through a flue gas scrubber. With the method, which is not according to the invention heat from the flue gas can be efficiently recovered into the district heating water.

The step of transferring heat from the first portion of the fluid into the second portion of the fluid may comprise passing the first portion of the fluid through an evaporator wherein heat is transferred from the first portion of the fluid into a cooling media which circulates between the evaporator and a condenser, and passing the second portion of the fluid through the condenser wherein heat is transferred from the cooling media into the second portion of the fluid.

The evaporator and the condenser form a heat pump in which heat is transferred by using the cooling media, such as ammonia (NH₃, R717). In the evaporator the cooling media evaporates into a gas. The gas is compressed to a higher pressure level and at the same time its temperature is increased. In the condenser the gas condenses and the condensing heat is transferred into the second portion of the fluid.

Because the heat pump operates with a relatively low differential temperature, very high COP (coefficient of performance) values can be achieved. For example, if the cooling media is ammonia, the evaporating temperature is 40 °C, the condensating temperature is 65 °C and the isentropic efficiency of the compressor is 87 %, the COP has a value of 9.6.

The method may comprise, after passing the first portion of the fluid through the first heat exchanger, combining the first portion of the fluid with the second portion of the fluid. The first portion of the fluid may be combined with the second portion of the fluid after the second portion of the fluid is heated, that is to say after the second portion of the fluid has passed through the condenser of the heat pump. The first portion of the fluid may alternatively be combined with the second portion of the fluid before the second portion of the fluid is heated, whereby also the first portion of the fluid passes through the condenser of the heat pump and is thus also heated.

The method may comprise circulating scrubbing liquid from the flue gas scrubber into a second heat exchanger and back to the flue gas scrubber, and passing the second portion of the fluid through the second heat exchanger, whereby heat from the scrubbing liquid is transferred into the second portion of the fluid.

The second portion of the fluid may be passed through the second heat exchanger before the heat is transferred from the first portion of the fluid into the second portion of the fluid. An advantage of this is that it improves efficiency because the temperature of the scrubbing liquid that is circulated from the second heat exchanger back to the flue gas scrubber is lower compared to a situation where the heat is transferred into the second portion of the fluid before the second heat exchanger.

The flue gas may be passed through a first and a second heat exchange zone of the flue gas scrubber. The first and the second heat exchange zone are arranged one on top of the other in the flue gas scrubber. A heat exchange zone comprises a random packing bed acting as a heat and mass transfer surface. The flue gas is cooled by spraying scrubbing liquid over the packing bed, as a result of which the water vapour contained in the flue gas condenses and heat is released from the flue gas.

The flue gas may be cooled in the first heat exchange zone by the scrubbing liquid circulated through the first heat exchanger, and in the second heat exchange zone by the scrubbing liquid circulated through the second heat exchanger. The first heat exchange zone is arranged above the second heat exchange zone. Therefore, the scrubbing liquid that is circulated from the first heat exchanger and sprayed above the first heat exchange zone passes through both of the heat exchange zones. The scrubbing liquid that is circulated from the second heat exchanger and sprayed above the second heat exchange zone passes only through the second heat exchange zone. The temperature of the scrubbing liquid sprayed above the first heat exchange zone is lower than the temperature of the scrubbing liquid sprayed above the second heat exchange zone. The temperature difference between the scrubbing liquids can be, for example, 10-20 °C. An advantage of providing the cooling of the flue gas in two heat exchange zones is that the heat pump can be dimensioned for lower capacity and therefore the operating costs are lower.

The first portion of the fluid may be cooled to a temperature below 42 °C. When the first portion of the fluid is cooled below 42 °C, the scrubbing liquid that is used for cooling the flue gas is capable of releasing a large amount of condensation heat from the flue gas.

The scrubbing liquid may be scrubbing water.

The fluid may be district heating water. By district heating water is meant water that flows in a district heating network. Preferably, the district heating water is return water of a district heating network, i.e. return district heating water. The return district heating water is water that returns from the district heating network to a district heating plant to be heated. The use of the return district heating water is advantageous because the water that returns from the district heating network to be heated in the district heating plant has the lowest temperature within the district heating system.

The present invention relates to an arrangement for transferring heat from flue gas into fluid as defined in claim 1. A typical arrangement according to the invention comprises a flue gas scrubber configured to cool the flue gas, which is passed through the flue gas scrubber, with scrubbing liquid, and a first heat exchanger coupled to the flue gas scrubber, the first heat exchanger being configured to transfer heat from the scrubbing liquid, which is circulated between the flue gas scrubber and the first heat exchanger, into a first portion of the fluid, the first portion of the fluid being configured to pass through the first heat exchanger. A typical arrangement according to the invention further comprises a heat pump coupled to the first heat exchanger, the heat pump being configured to transfer heat from the first portion of the fluid into a second portion of the fluid.

In the flue gas scrubber the flue gas is sprayed with the scrubbing liquid, whereby the water vapour contained in the flue gas condenses and the condensing heat is transferred into the scrubbing liquid. The scrubbing liquid is circulated by using a pump through the first heat exchanger in which the heat contained in the scrubbing liquid is transferred into the first portion of the fluid. The fluid is divided into the first and the second portion by a control valve. The heat from the first portion of the fluid is transferred to the second portion of the fluid before the first portion of the fluid is supplied to the first heat exchanger.

An arrangement according to the invention can be arranged as a part of various types of heating and power plants. Especially an arrangement according to the invention can be arranged as a part of a district heating plant which comprises a heating boiler for heating district heating water that flows in a district heating network. In the heating boiler the fuel is burned, which produces flue gas. With the arrangement according to the invention the heat contained in the flue gas can be efficiently recovered and transferred into the district heating water.

According to an embodiment of the invention the heat pump comprises an evaporator and a condenser wherein the evaporator is coupled to the first heat exchanger, the evaporator being configured to transfer heat from the first portion of the fluid, which is passed through the evaporator, into a cooling media which is configured to circulate between the evaporator and the condenser, and the condenser is configured to transfer heat from the cooling media into the second portion of the fluid, which is passed through the condenser.

The arrangement according to the invention comprises a second heat exchanger coupled to the flue gas scrubber, the second heat exchanger being configured to transfer heat from the scrubbing liquid, which is circulated between the flue gas scrubber and the second heat exchanger, into the second portion of the fluid, the second portion of the fluid being configured to pass through the second heat exchanger.

According to an embodiment of the invention the flue gas scrubber comprises a first heat exchange zone and a second heat exchange zone wherein the scrubbing liquid circulated through the first heat exchanger is configured to cool the flue gas in the first heat exchange zone, and the scrubbing liquid circulated through the second heat exchanger is configured to cool the flue gas in the second heat exchange zone.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

### BRIEF DESCRIPTION OF THE DRAWINGS

- Fig. 1: illustrates a district heating plant according to the prior art,
- fig. 2: illustrates a district heating plant comprising a heat recovery arrangement, which is not according to the invention,
- fig. 3: illustrates a district heating plant comprising a heat recovery arrangement according to a first embodiment of the invention, and
- fig. 4: illustrates a district heating plant comprising a heat recovery arrangement according to a second embodiment of the invention.

### DETAILED DESCRIPTION OF THE PREFERRED EMBODIMENTS OF THE INVENTION

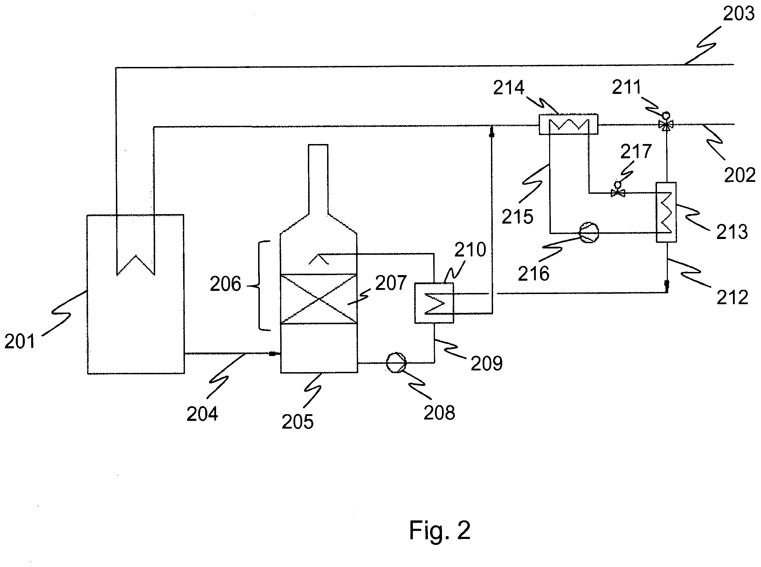

Fig. 1 has been described in detail in the description of the background of the invention. Therefore, the following discussion will focus on figs. 2 to 4.

Fig. 2 illustrates a district heating plant which comprises an arrangement for transferring heat from flue gas into district heating water. The district heating plant of fig. 2 differs from the district heating plant of fig. 1 in that it comprises a heat pump for cooling district heating water before it is passed through a heat exchanger.

Similarly as in fig. 1, the district heating plant of fig. 2 comprises a heating boiler 201 in which fuel is burned. The fuel and the air that are needed in the combustion process are supplied into the heating boiler 201. The heat energy that is released in the combustion of the fuel is used to heat water that flows in a district heating network. The water to be heated is supplied to the heating boiler 201 through a return pipe 202, and the heated water is supplied back to the district heating network through a supply pipe 203.

The combustion of the fuel produces flue gas which is led from the heating boiler 201 through a pipe 204 into a flue gas scrubber 205. In the flue gas scrubber 205, the flue gas is passed through a heat exchange zone 206 which comprises a random packing bed 207. The flue gas is cooled by spraying scrubbing water over the packing bed 207, as a result of which heat is released from the flue gas and recovered into the scrubbing water. The scrubbing water is circulated by using a pump 208 through a circulating pipe 209 from the flue gas scrubber 205 into a heat exchanger 210, and back to the flue gas scrubber 205.

The return water of the district heating network is divided into two portions by a three-way valve 211. The first portion of the return water is circulated via a pipe 212 through an evaporator 213 and the heat exchanger 210, and then combined with the second portion of the return water. In the heat exchanger 210 heat from the scrubbing water is transferred into the first portion of the return water.

Before the first portion of the return water is passed through the heat exchanger 210, heat from the first portion of the return water is transferred into the second portion of the return water by a heat pump which comprises the evaporator 213 and a condenser 214 through which the first portion and the second portion of the return water are passed, respectively. The evaporator 213 is coupled in connection with the pipe 212 between the three-way valve 211 and the heat exchanger 210. The condenser 214 is coupled in connection with the return pipe 202 between the three-way valve 211 and the point where the first portion of the return water is combined with the second portion of the return water.

In the evaporator 213, heat is transferred from the first portion of the return water into a cooling media which evaporates into a gas. The cooling media is circulated between the evaporator 213 and the condenser 214 in a circulating pipe 215 by a pump 216. The circulating pipe 215 is equipped with a valve 217 for controlling the flow rate of the cooling media. In the condenser 214 the gas condenses and the condensing heat is transferred into the second portion of the return water.

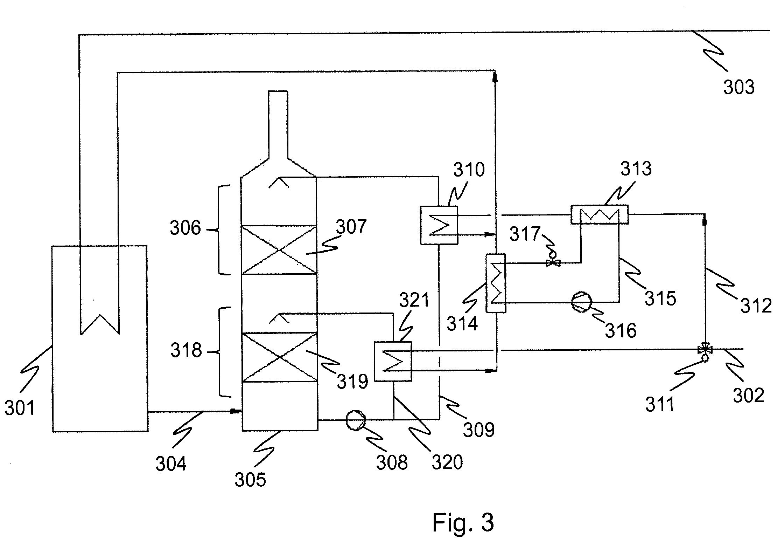

Fig. 3 illustrates a district heating plant which comprises an arrangement according to a first embodiment of the invention for transferring heat from flue gas into district heating water. The district heating plant of fig. 3 differs from the district heating plant of fig. 2 in that it comprises another circulation circuit for the scrubbing water.

Similarly as in fig. 2, the district heating plant of fig. 3 comprises a heating boiler 301 in which fuel is burned. The fuel and the air that are needed in the combustion process are supplied into the heating boiler 301. The heat energy that is released in the combustion of the fuel is used to heat water that flows in a district heating network. The water to be heated is supplied to the heating boiler 301 through a return pipe 302, and the heated water is supplied back to the district heating network through a supply pipe 303.

Flue gas is led from the heating boiler 301 through a pipe 304 into a flue gas scrubber 305. The flue gas scrubber 305 comprises a first 306 and a second 318 heat exchange zone which are arranged one on top of the other. The flue gas is passed through the heat exchange zones 306, 318 which comprise random packing beds 307, 319.

The flue gas is cooled by spraying scrubbing water over the packing beds 307, 319, as a result of which heat is released from the flue gas and recovered into the scrubbing water. The scrubbing water is circulated by using a pump 308 through a first circulating pipe 309 from the flue gas scrubber 305 into a first heat exchanger 310, and back to the flue gas scrubber 305 to be sprayed in the first heat exchange zone 306. The scrubbing water is also circulated by using the pump 308 through a second circulating pipe 320 from the flue gas scrubber 305 into a second heat exchanger 321, and back to the flue gas scrubber 305 to be sprayed in the second heat exchange zone 317.

The return water of the district heating network is divided into two portions by a three-way valve 311. The first portion of the return water is circulated via a pipe 312 through an evaporator 313 and the first heat exchanger 310, and then combined with the second portion of the return water. In the first heat exchanger 310 heat from the scrubbing water is transferred into the first portion of the return water. The second portion of the return water is circulated through a second heat exchanger 321 and a condenser 314. In the second heat exchanger 321 heat from the scrubbing water is transferred into the second portion of the return water.

Heat from the first portion of the return water is transferred into the second portion of the return water by a heat pump which comprises the evaporator 313 and the condenser 314. The evaporator 313 is coupled in connection with the pipe 312 between the three-way valve 311 and the first heat exchanger 310. The condenser 314 is coupled in connection with the return pipe 302 between the second heat exchanger 321 and the point where the first portion of the return water is combined with the second portion of the return water.

In the evaporator 313, heat is transferred from the first portion of the return water into a cooling media which evaporates into a gas. The cooling media is circulated between the evaporator 313 and the condenser 314 in a circulating pipe 315 by a pump 316. The circulating pipe 315 is equipped with a valve 317 for controlling the flow rate of the cooling media. In the condenser 314 the gas condenses and the condensing heat is transferred into the second portion of the return water.

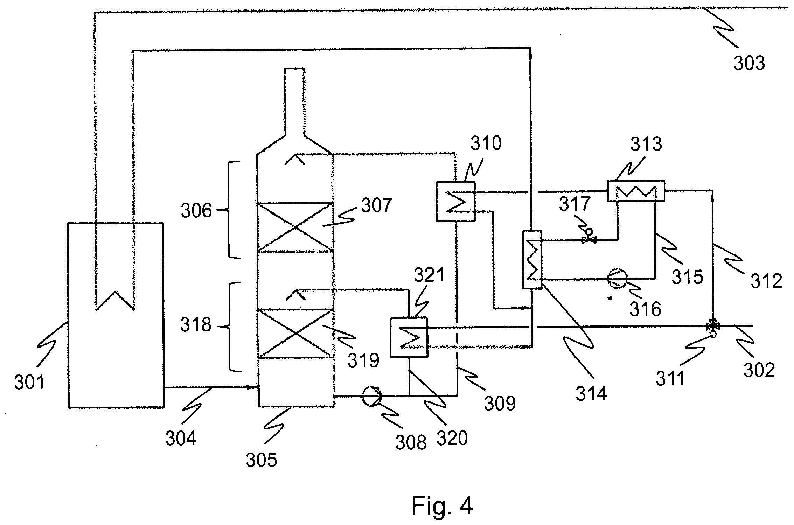

Fig. 4 illustrates a district heating plant which comprises an arrangement according to a second embodiment of the invention for transferring heat from flue gas into district heating water. The district heating plant of fig. 4 differs from the district heating plant of fig. 3 only in that the first portion of the return water is combined with the second portion of the return water before the return water is passed through the condenser 314. Thus in the condenser 314 heat is also transferred to the first portion of the return water.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. An arrangement for transferring heat from flue gas into fluid, comprising:
- a flue gas scrubber (305) configured to cool the flue gas, which is passed through the flue gas scrubber (305), with scrubbing liquid,
- a control valve configured to divide the fluid into a first and a second portion, and
- a first heat exchanger (310) coupled to the flue gas scrubber (305), the first heat exchanger (310) being configured to transfer heat from the scrubbing liquid, which is circulated between the flue gas scrubber (305) and the first heat exchanger (310), into the first portion of the fluid, the first portion of the fluid being configured to pass through the first heat exchanger (310);
**characterised in that** the arrangement comprises:
- a second heat exchanger (321) coupled to the flue gas scrubber (305), the second heat exchanger (321) being configured to transfer heat from the scrubbing liquid, which is circulated between the flue gas scrubber (305) and the second heat exchanger (321), into the second portion of the fluid, the second portion of the fluid being configured to pass through the second heat exchanger (321), and
- a heat pump coupled to the first heat exchanger (310), the heat pump being configured to transfer heat from the first portion of the fluid into the second portion of the fluid before the first portion of the fluid is supplied to the first heat exchanger (310).

2. The arrangement according to claim 1, **characterised in that** the heat pump comprises an evaporator (313) and a condenser (314) wherein:
- the evaporator (313) is coupled to the first heat exchanger (310), the evaporator (313) being configured to transfer heat from the first portion of the fluid, which is passed through the evaporator (313), into a cooling media which is configured to circulate between the evaporator (313) and the condenser (314), and
- the condenser (314) is configured to transfer heat from the cooling media into the second portion of the fluid, which is passed through the condenser (314).

3. The arrangement according to claim 1 or 2, **characterised in that** the flue gas scrubber (305) comprises a first heat exchange zone (306) and a second heat exchange zone (318), wherein the scrubbing liquid circulated through the first heat exchanger (310) is configured to cool the flue gas in the first heat exchange zone (306), and the scrubbing liquid circulated through the second heat exchanger (321) is configured to cool the flue gas in the second heat exchange zone (318).

4. A district heating plant, **characterised in that** the district heating plant comprises an arrangement according to any of claims 1 to 3.

## Patentansprüche

1. Vorrichtung zur Übertragung von Wärme aus Abgas in Flüssigkeit, umfassend:
- einen Abgasreiniger (205, 305), der eingerichtet ist, das Abgas, das durch den Abgasreiniger (205, 305) geleitet wird, mit Reinigungsflüssigkeit zu kühlen, und
- ein Steuerventi, das eingerichtet ist, die Flüssigkeit in einen ersten und einen zweiten Teil zu teilen, und
- einen ersten Wärmetauscher (210, 310), der mit dem Abgasreiniger (205, 305) gekoppelt ist, wobei der erste Wärmetauscher (210, 310) eingerichtet ist, Wärme aus der Reinigungsflüssigkeit, die zwischen dem Abgasreiniger (205, 305) und dem ersten Wärmetauscher (210, 310) zirkuliert, in den ersten Teil der Flüssigkeit zu übertragen, wobei der erste Teil der Flüssigkeit eingerichtet ist, durch den ersten Wärmetauscher (210, 310) geleitet zu werden;
**dadurch gekennzeichnet, dass** die Vorrichtung umfasst:
- einen zweiten Wärmetauscher (321), der mit dem Abgasreiniger (305) gekoppelt ist, wobei der zweite Wärmetauscher (321) eingerichtet ist, Wärme aus der Reinigungsflüssigkeit, die zwischen dem Abgasreiniger (305) und dem zweiten Wärmetauscher (321) zirkuliert, in einen zweiten Teil der Flüssigkeit zu übertragen, wobei der zweite Teil der Flüssigkeit eingerichtet ist, durch den zweiten Wärmetauscher (321) geleitet zu werden, und
- eine Wärmepumpe, die mit dem ersten Wärmetauscher (210, 310) gekoppelt ist, wobei die Wärmepumpe eingerichtet ist, Wärme aus dem ersten Teil der Flüssigkeit in den zweiten Teil der Flüssigkeit zu übertragen bevor der erste Teil der Flüssigkeit dem ersten Wärmetauscher (210, 310) zugeführt ist.

2. Anordnung nach Anspruch 1, **dadurch gekennzeichnet, dass** die Wärmepumpe einen Verdampfer (213, 313) und einen Kondensator (214, 314) umfasst, wobei:
- der Verdampfer (213, 313) mit dem ersten Wärmetauscher (210, 310) gekoppelt ist, wobei der Verdampfer (213, 313) eingerichtet ist, Wärme aus dem ersten Teil der Flüssigkeit, die durch den Verdampfer (213, 313) in ein Kühlmedium, das eingerichtet ist, zwischen dem Verdampfer (213, 313) und dem Kondensator (214, 314) zu zirkulieren, zu übertragen, und
- der Kondensator (214, 314) eingerichtet ist, Wärme aus dem Kühlmedium in den zweiten Teil der Flüssigkeit, die durch den Kondensator (214, 314) geleitet wird, zu übertragen.

3. Anordnung nach Anspruch 1 oder 2, **dadurch gekennzeichnet, dass** der Abgasreiniger (305) einen ersten Wärmetauscherbereich (306) und einen zweiten Wärmetauscherbereich (318) umfasst, wobei die Reinigungsflüssigkeit, die durch den ersten Wärmetauscher (310) zirkuliert, eingerichtet ist, das Abgas in dem ersten Wärmetauscherbereich (306) zu kühlen, und die Reinigungsflüssigkeit, die durch den zweiten Wärmetauscher (321) zirkuliert, eingerichtet ist, das Abgas in dem zweiten Wärmetauscherbereich (318) zu kühlen.

4. Ein Fernheizwerk, **dadurch gekennzeichnet, dass** das Fernheizwerk eine Anordnung nach einem der Ansprüche 1 bis 3 umfasst.

## Revendications

1. Agencement pour transférer la chaleur d'un gaz de combustion vers un fluide, comprenant:
- un épurateur de gaz de combustion (205, 305) configuré pour refroidir le gaz de combustion, qui est passé à travers l'épurateur de gaz de combustion (205, 305), avec du liquide d'épuration,
- une valve de règlage configurée pour diviser le fluide en une première et en une deuxième portion, et
- un premier échangeur de chaleur (210, 310) couplé à l'épurateur de gaz de combustion (205, 305), le premier échangeur de chaleur (210, 310) étant configuré pour transférer de la chaleur au liquide d'épuration, lequel est mis en circulation entre l'épurateur de gaz de combustion (205, 305) et le premier échangeur de chaleur (210, 310), dans la première partie du fluide, la première partie du fluide étant configurée pour passer à travers le premier échangeur de chaleur (210, 310) ;
**caractérisé en ce que** l'agencement comprend :
- un deuxième échangeur de chaleur (321) couplé à l'épurateur de gaz de combustion (305), le deuxième échangeur de chaleur (321) étant configuré pour transférer de la chaleur au liquide d'épuration, lequel est mis en circulation entre l'épurateur de gaz de combustion (305) et le deuxième échangeur de chaleur (321), dans la deuxième partie du fluide, la deuxième partie du fluide étant configurée pour passer à travers le deuxième échangeur de chaleur (321), et
- une pompe à chaleur couplée avec le premier échangeur de chaleur (210, 310), la pompe à chaleur étant configurée pour transférer la chaleur de la première partie du fluide dans la deuxième partie du fluide préalablement au passage de la première partie du fluide au premier échangeur de chaleur (210, 310).

2. Agencement selon la revendication 1, **caractérisé en ce que** la pompe à chaleur comprend un évaporateur (213, 313) et un condenseur (213, 314), dans lequel:
- l'évaporateur (213, 313) est couplé au premier échangeur de chaleur (210, 310), l'évaporateur (213, 313) étant configuré pour transférer la chaleur de la première partie du fluide, qui est passée à travers l'évaporateur (213, 313), dans un milieu de refroidissement qui est configuré pour circuler entre l'évaporateur (213, 313) et le condenseur (214, 314), et
- le condenseur (214, 314) est configuré pour transférer la chaleur du milieu de refroidissement dans la deuxième partie du fluide, qui est passée à travers le condenseur (214, 314).

3. Agencement selon la revendication 1 ou 2, **caractérisé en ce que** l'épurateur de gaz de combustion (305) comprend une première zone d'échange de chaleur (306) et une deuxième zone d'échange de chaleur (318), dans lequel le liquide d'épuration mis en circulation à travers le premier échangeur de chaleur (310) est configuré pour refroidir le gaz de combustion dans la première zone d'échange de chaleur (306), et le liquide d'épuration mis en circulation à travers le deuxième échangeur de chaleur (321) est configuré pour refroidir le gaz de combustion dans la deuxième zone d'échange de chaleur (318).

4. Usine de chauffage urbain, **caractérisée en ce que** l'usine de chauffage urbain comprend un agencement selon l'une quelconque des revendications 1 à 3.
